# EUROPÄISCHE PATENTSCHRIFT

(11) **EP 2 472 142 B1**
(45) Veröffentlichungstag und Bekanntmachung des Hinweises auf die Patenterteilung: **21.08.2019**
(21) Anmeldenummer: 11188968.9
(22) Anmeldetag: 14.11.2011
(51) Int. Cl.: F16F 7/10, F16F 7/108, B41F 13/08, D21G 1/00, F16F 15/14, F16F 15/00

(54) **Rotierendes Maschinenteil**
Rotating machine part
Pièce de machine rotative

(30) Priorität: 28.12.2010 DE 102010060699
(43) Veröffentlichungstag der Anmeldung: 04.07.2012
(73) Patentinhaber: Isoloc Schwingungstechnik GmbH, 70499 Stuttgart (DE)
(72) Erfinder: Schürrle, Uwe, 70499 Stuttgart (DE)
(74) Vertreter: Fleck, Hermann-Josef

(56) Entgegenhaltungen:
- EP-A2- 2 196 697
- DE-A1- 19 907 079
- DE-A1-102007 031 090
- DE-U1- 9 011 147

## Beschreibung

Die Erfindung bezieht sich auf einen rotierenden Maschinenteil mit einer gedämpften Schwingungstilgervorrichtung, die in einen konzentrischen zentralen Hohlraum des Maschinenteils eingebracht ist und eine Zusatzmasse sowie ein zwischen dieser und der den Hohlraum begrenzenden Innenfläche des Maschinenteils angeordnetes Zusatz-Feder-/Dämpfungssystem mit einem elastischen Dämpfungskörper aufweist.

Ein rotierendes Maschinenteil dieser Art mit einer gedämpften Schwingungstilgervorrichtung ist in der DE 199 07 079 A1 angegeben. Hierbei ist im Bereich der Achse einer Walze ein Joch vorgesehen, an welchem eine ganze Reihe von Kraftgeräten bzw. Spannelementen angreift, die andernends auf die Innenumfangsfläche der Walze einwirken.

An rotierenden Maschinenteilen, wie z. B. Wellen, Walzen oder Dorne von Textilmaschinen, Druckmaschinen, Produktionsmaschinen für Zeitungen oder dgl. entstehen durch den eigenen Betrieb der Maschinen oder aber durch Anregungen von außen resonanzartige Schwingungen an den Maschinenteilen. Oft sind die rotierenden Maschinenteile unter anderem auch aus Kostengründen hohl ausgebildet, und die Biegeeigenfrequenzen solcher Maschinenteile liegen in relativ niedrigen Frequenzbereichen von in der Regel 5 bis 250 Hz. Die Maschinenteile haben sehr geringe Materialdämpfung, so dass durch die Anregung der Biegeeigenfrequenzen die resonanzartigen Schwingungen an diesen Maschinenteilen begünstigt werden. Die Schwingungen beeinflussen die Funktionalität, Produktivität, Qualität und Genauigkeit der Bearbeitung mit diesen Maschinen negativ.

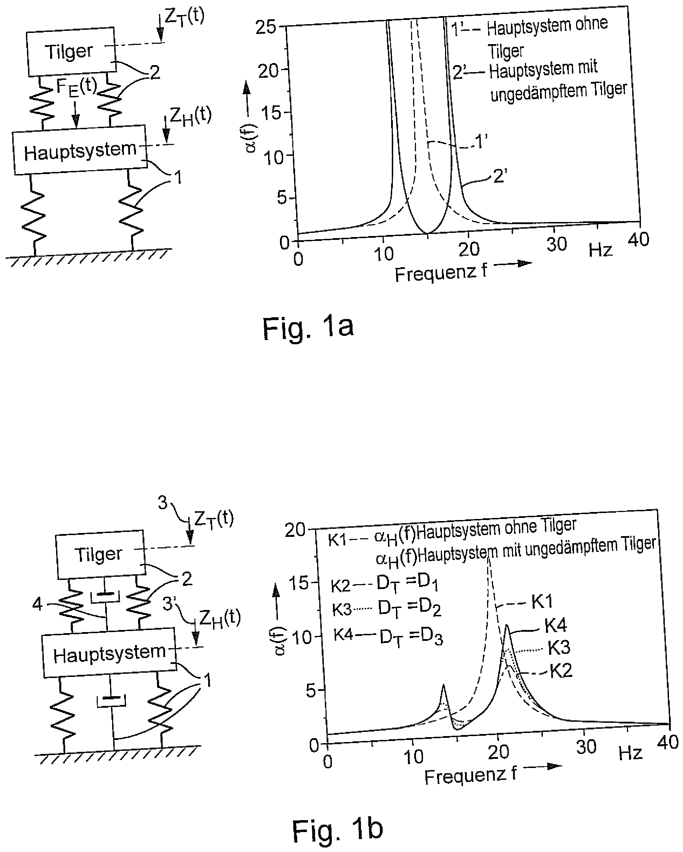

Zur Tilgung der resonanzartigen Schwingungen rotierender Teile von Maschinen ist es bekannt, ein solches Hauptsystem mit einem Zusatzschwinger mit Zusatzmasse sowie Zusatzfeder-/Dämpfersystem zu versehen und Masse, Steifigkeit und Dämpfungskoeffizienten so zu optimieren, dass die Schwingungen des Hauptsystems klein werden. Diese prinzipielle Vorgehensweise ist in Fig. 1a und 1b gezeigt, wobei Fig. 1a auf der linken Seite ein mechanisches Prinzipschaltbild eines ungedämpften Schwingungstilgungssystems mit Federn und Masse des Hauptsystems 1 sowie Federn und Masse des Zusatzschwingers 2 zeigt und in der rechten Darstellung die Schwingungsamplituden über der Frequenz für das Hauptsystem ohne Schwingungstilger (Kurve 1') und für das Hauptsystem mit ungedämpftem Schwingungstilger (Kurve 2') zeigt. In der Fig. 1b ist ein Schwingungssystem aus einem Hauptsystem 1 mit Hauptmasse, Federn und Dämpfung sowie dem Zusatzschwinger 2 mit Zusatzmasse und Zusatzfeder-/Dämpfersystem 4 gezeigt, also ein gedämpfter Schwingungstilger, sowie ein Schwingungsdiagramm der Schwingungsamplituden in Abhängigkeit der Frequenz für ein Hauptsystem ohne Tilger (Kurve K1) und ein Hauptsystem mit verschiedenen gedämpften Tilgern (Kurven K2, K3, K4). Beide Arten von Schwingungstilgern können konstruktiv auf verschiedene Weise realisiert werden, beispielsweise als Federtilger, Pendeltilger, Drehpendeltilger oder Stoßtilger. Dabei sind die Schwingungstilger für rotierende Maschinenteile konstruktiv aufwändig.

In der EP 2 196 697 A2 ist ein rotierendes Maschinenteil der eingangs genannten Art als bekannt ausgewiesen, bei dem in einem konzentrischen Hohlraum des Maschinenteils eine Schwingungstilgervorrichtung aus Zusatzmasse und Zusatz-Feder-/Dämpfungssystem eingebracht ist. Das Zusatz-Feder-/Dämpfungssystem ist aus mindestens einer elastischen dämpfenden Schicht gebildet, die konzentrisch zwischen der Zusatzmasse und der den Hohlraum begrenzenden Innenfläche des Maschinenteils angeordnet ist. Zentralseitig innerhalb der Zusatzmasse ist eine Spreizvorrichtung mit Gewinde aufweisenden Verstellgliedern angeordnet, mittels deren die Zusatzmasse mehr oder weniger weit radial nach außen gedrückt werden kann, wobei auch die elastische dämpfende Schicht mehr oder weniger stark zusammengedrückt wird und ihre federnden und dämpfenden Eigenschaften entsprechend ändert. Mit diesen Maßnahmen können Schwingungen des Maschinenteils weitgehend unterdrückt werden, wobei genaue Abstimmungsmöglichkeiten gegeben sind. Die mechanische Anpassung und die Justiermaßnahmen können aber mit nicht unerheblichem Aufwand verbunden sein.

Der Erfindung liegt die Aufgabe zugrunde, ein rotierendes Maschinenteil mit einer gedämpften Schwingungstilgervorrichtung der eingangs genannten Art bereit zu stellen, die bei möglichst einfachem Aufbau einfache Verstellmöglichkeiten bietet.

Diese Aufgabe wird mit den Merkmalen des Anspruches 1 gelöst. Hierbei ist vorgesehen, dass die Spreizvorrichtung mit einem fluiden Druckmedium beaufschlagbare Spreizmittel aufweist, die radial nach außen gerichtete Druckkräfte erzeugen.

Mit diesen Maßnahmen ergeben sich gut steuerbare und genau abstimmbare Verstellmöglichkeiten der Schwingungstilgervorrichtung.

Dabei bestehen für den Aufbau und die Funktion vorteilhafte Varianten darin, dass die Spreizmittel radial nach außen gerichtete Kolben-Zylindereinheiten aufweisen, die in einem zentralseitig innerhalb der Zusatzmasse angeordneten Haltekörper gelagert sind, und/oder dass die Spreizmittel mindestens einen zentralseitig innerhalb der Zusatzmasse angeordneten balgartigen Aufnahmekörper für das Druckmedium aufweisen.

Verschiedene vorteilhafte Ausgestaltungen bestehen darin, dass das Druckmedium gasförmig oder flüssig ist und die Spreizvorrichtung pneumatisch oder hydraulisch arbeitend ausgebildet ist.

Ein einfacher Aufbau mit zuverlässiger Funktion und vorteilhafter Montage wird dadurch erhalten, dass der Maschinenteil, die Zusatzmasse, der Dämpfungskörper, der Hohlraum und eine zentral in der Schwingungstilgervorrichtung ausgebildete Hohlkammer zylinderförmig ausgebildet sind und stirnseitig an der Hohlkammer eine Zuführeinheit zum Einbringen des Druckmediums in die Hohlkammer angeordnet ist.

Der Aufbau und die Funktion werden auch dadurch begünstigt, dass die Hohlkammer auf ihrer von der Zuführeinheit abgelegenen Stirnseite mit einem Bodenabschnitt abgeschlossen ist.

Zu einer günstigen Installation tragen die Maßnahmen bei, dass die Zuführeinheit ein Kupplungsteil aufweist, an das eine Leitung für das Druckmedium mit einem Kupplungs-Gegenstück fluiddicht ankoppelbar ist.

Ist vorgesehen, dass der Kupplungsteil eine Rotation des Maschinenteils mit der Spreizvorrichtung relativ zu der Leitung mit dem Kupplungs-Gegenstück zulässt, so kann auch eine gesteuerte oder geregelte Einstellung der Schwingungstilgervorrichtung im Betrieb während einer Rotation des Maschinenteils erfolgen.

Eine für den Aufbau günstige Ausgestaltung besteht darin, dass Teile der Kolben-Zylindereinheiten in dem zu dem rotierenden Maschinenteil konzentrischen zylinderförmigen Haltekörper ausgebildet sind.

Eine für die Verstellung der Zusatzmasse und die Einwirkung auf den elastischen Dämpfungskörper vorteilhafte Ausgestaltung besteht darin, dass die Zusatzmasse aus mehreren in Umfangsrichtung voneinander getrennten Teilschalen, insbesondere zwei zylindrischen Halbschalen, besteht.

Gute Einstell- und Abstimmmöglichkeiten auf unterschiedliche Eigenschaften und/oder Betriebsweisen des Maschinenteils werden dadurch erreicht, dass der Hohlraum über den Kupplungsteil und die Leitung mit dem Gegenstück an ein Druckmediumreservoir angeschlossen oder anschließbar ist und dass eine Steuerungseinrichtung vorhanden ist, die zur gesteuerten oder geregelten Zuführung und Abführung des Druckmediums ausgebildet ist.

Die Erfindung wird nachfolgend anhand von Ausführungsbeispielen unter Bezugnahme auf die Zeichnungen näher erläutert. Es zeigen:
- Fig. 1a) und b): ein Hauptsystem mit einem Schwingungstilger in ungedämpfter (a) bzw. gedämpfter (b) Ausführung jeweils mit mechanischem Ersatzschaltbild und einem Amplitudenfrequenzgang,
- Fig. 2: ein Prinzipschaltbild eines Maschinenteils mit eingebrachter Schwingungstilgervorrichtung,
- Fig. 3: ein Diagramm zum Schwingungsverlauf über der Zeit sowie ein Diagramm der Schwingungsamplitude über der Frequenz jeweils ohne und mit Schwingungstilger,
- Fig. 4: ein erstes Ausführungsbeispiel für eine in einem rotierenden Maschinenteil eingebaute Schwingungstilgervorrichtung im Längsschnitt mit Anschluss an ein Druckmediumreservoir und Steuerungseinrichtung,
- Fig. 5: einen Querschnitt des rotierenden Maschinenteils mit eingebauter Schwingungstilgervorrichtung nach Fig. 4,
- Fig. 6: ein zentrales Detail X des Maschinenteils mit der Schwingungstilgervorrichtung nach Fig. 5,
- Fig. 7A: einen Ausschnitt des Maschinenteils mit Schwingungstilgervorricthung nach Fig. 6 bei einer ersten Einstellung der Schwingungstilgervorrichtung und
- Fig. 7B: einen Ausschnitt entsprechend Fig. 7A bei einer zweiten Einstellung der Schwingungstilgervorrichtung.

Wie eingangs beschrieben, zeigt Fig. 1a) ein schematisches Ersatzschaltbild für ein System mit einem ungedämpften Schwingungstilger aus einem Hauptsystem 1 mit Masse und Federanordnung sowie einem Zusatzschwinger 2 mit Zusatzmasse und Zusatzfeder sowie ein entsprechendes Diagramm eines Amplitudenfrequenzganges für ein Hauptsystem ohne Schwingungstilger (1') und ein Hauptsystem mit ungedämpftem Tilger (2') und Fig. 1b) ein Ersatzschaltbild für ein System mit gedämpftem Schwingungstilger aus einem Hauptsystem 1 mit Hauptmasse, Federanordnung und Dämpfung sowie einem Zusatzschwinger 2 mit Zusatzmasse und Zusatzfeder-/Dämpfersystem 4 und einen entsprechenden Amplitudenfrequenzgang für ein Hauptsystem ohne Tilger (K1) und ein Hauptsystem mit verschiedenen gedämpften Tilgern (K2, K3, K4). Mit 3 ist ein Weg Z_{T}(t) der Masse des Zusatzschwingers über der Zeit und mit 3' ein Weg Z_{H}(t) der Masse des Hauptsystems über der Zeit bezeichnet. Diese Aufbauten und Verläufe der Amplituden über der Frequenz (Amplitudenfrequenzgänge) sind an sich bekannt.

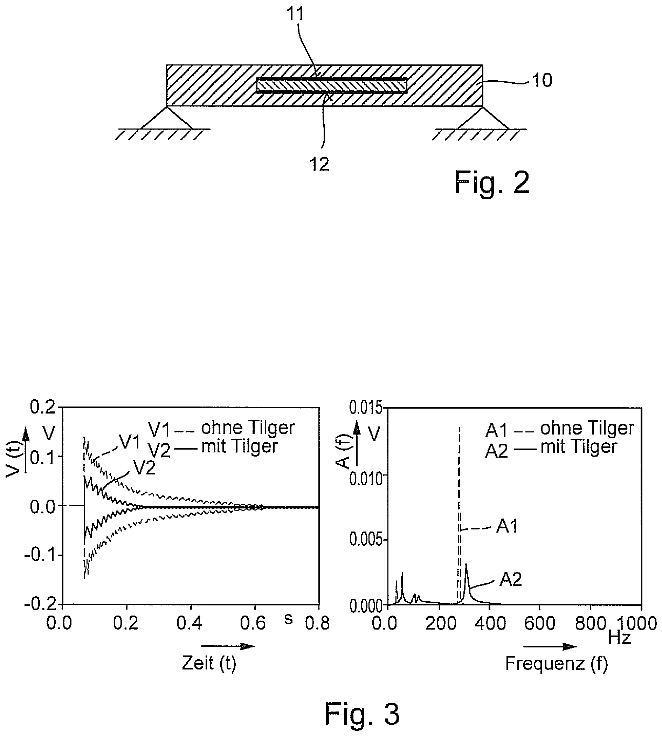

In Fig. 2 ist eine Hauptmasse 10, beispielsweise ein Maschinenteil, mit einer in einem darin ausgebildeten Hohlraum eingebrachten Schwingungstilgervorrichtung gezeigt, die eine Zusatzmasse 12 und eine zwischen der den Hohlraum begrenzenden Wandung und der Zusatzmasse 12 angeordnete elastische dämpfende Schicht 11 aufweist. Durch die Einbringung der Schwingungstilgervorrichtung als Zusatzschwinger können je nach Ausbildung und Einstellung der Schwingungstilgervorrichtung die Schwingungseigenschaften des Gesamtsystems beeinflusst werden, so dass auf diese Weise insbesondere auch ein rotierendes Maschinenteil als Hauptmasse 10, wie z. B. ein Dorn, eine Walze, oder eine Welle einer Maschine, etwa einer Textilmaschine oder einer Druckmaschine oder einer anderen Maschine mit rotierenden Maschinenteilen, in seinem Schwingungsverhalten positiv beeinflusst werden kann bzw. dessen Schwingungen erheblich reduziert werden können. Hierzu wird auf die elastische dämpfende Schicht 11 ein definierter Druck ausgeübt, beispielsweise durch Variieren des Außenumfangs der Zusatzmasse 12. Durch diese Konstruktion wird einerseits der Ein- und Ausbau des Tilgers in den bzw. aus dem insbesondere zylinderförmig ausgebildeten und zentral angeordneten Hohlraum der Hauptmasse 10 erleichtert und andererseits auch die Feder-/Dämpfungseigenschaft variierbar.

Fig. 3 zeigt Messergebnisse beispielsweise an einem Dorn für den Schwingungsverlauf v (t) über der Zeit t und der Schwingungsamplitude A (f) in Abhängigkeit von der Frequenz f ohne (V1, A1) und mit (V2, A2) Schwingungstilgervorrichtung. Es zeigt sich, dass die Schwingungsamplituden ohne Schwingungstilgervorrichtung wesentlich ausgeprägter sind als mit Schwingungstilgervorrichtung.

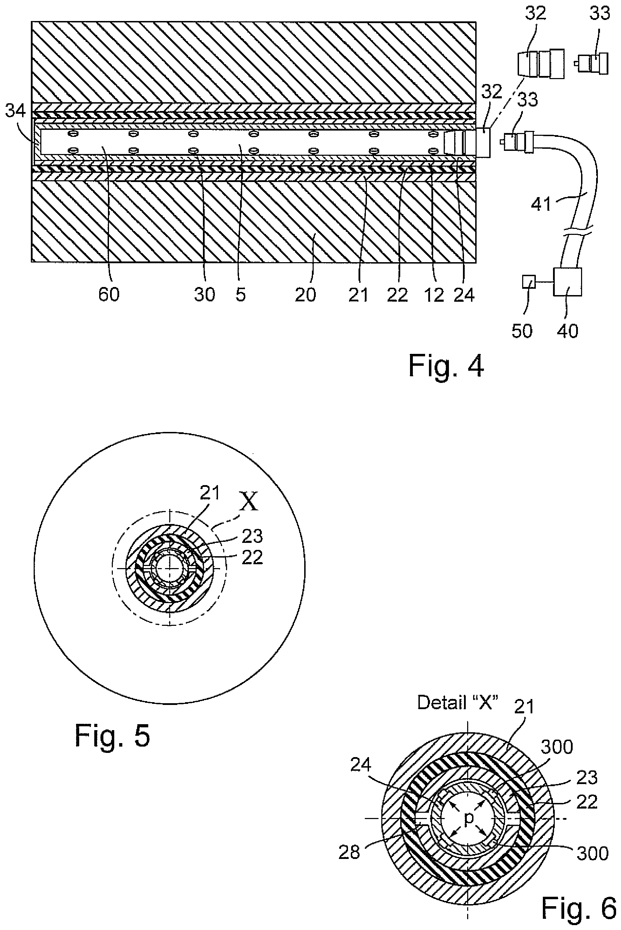

Fig. 4 zeigt ein Ausführungsbeispiel für ein rotierendes Maschinenteil 20 als Hauptmasse mit einer in dessen zylinderförmigen Hohlraum (6) konzentrisch einzusetzenden Schwingungstilgervorrichtung im Längsschnitt. Die Schwingungstilgervorrichtung weist ihrerseits eine konzentrische, zentral angeordnete zylindrische Hohlkammer 60 auf, die auf ihrer einen Stirnseite mit einem Bodenabschnitt 34 versehen ist und in deren anderer Stirnseite ein Einsatz als Kupplungsteil 32 zur Aufnahme eines Kupplungsgegenstückes 33 eingearbeitet oder eingesetzt ist. Die Schwingungstilgervorrichtung weist von außen nach innen eine Hülse 21, einen elastischen Dämpfungskörper 22 in Form einer elastischen kreisringförmigen Schicht insbesondere aus Elastomermaterial und die Zusatzmasse 12 auf, die vorliegend aus zwei zylinderförmigen Halbschalen 23 gebildet ist, wie die Querschnittsdarstellung in Fig. 5 und insbesondere die Detaildarstellung in Fig. 6 zeigen. Das Maschinenteil 20 bildet die in Fig. 3 gezeigte Hauptmasse 10, während der elastische Dämpfungskörper die elastische dämpfende Schicht 11 bildet. Die Zusatzmasse 12 kann auch aus mehreren durch radial gerichtete, achsparallel verlaufende Trennebenen bzw. Längsschitzen 28 voneinander getrennten teilzylindrischen Schalensegmenten gebildet sein. Der elastische Dämpfungskörper 22 kann geschichtet aus Materialien mit unterschiedlichen Dämpfungs- und Federeigenschaften aufgebaut sein.

Konzentrisch innerhalb der Zusatzmasse 12 ist ein Haltekörper 24 mit einer Hohlkammer 60 angeordnet.

In die Hohlkammer 60 wird ein fluides Druckmedium 31 eingebracht, das über das Kupplungsteil 32 zu- und abgeführt werden kann, indem an den Kupplungsteil 32 eine mit einem Druckmedium-Reservoir 40 verbundene Leitung 41 über das mit dieser verbundene Kupplungs-Gegenstück 33 angeschlossen wird. Das Kupplungsteil 32 ist vorteilhaft so ausgebildet, dass es bei abgenommenem Kupplungs-Gegenstück 33 selbsttätig dicht schließt und beim Einsetzen des Kupplungs-Gegenstücks 33 öffnet. Ferner ist der Verbindungsbereich zwischen Kupplungsteil 32 und Kupplungs-Gegenstück 33 so ausgebildet, dass das Maschinenteil mit der eingebauten Schwingungstilgervorrichtung relativ zu dem Kupplungs-Gegenstück 33 drehbar ist, so dass das Druckmedium 31 auch bei rotierendem Maschinenteil zuführbar bzw. abführbar ist. Zum gesteuerten oder vorzugsweise geregelten Zuführen und Abführen des Druckmediums 31 ist eine Steuerungseinrichtung 50 mit programmierbarer Steuerungseinheit, insbesondere Mikrocontroller, vorhanden.

Mit diesem Aufbau bildet die Schwingungstilgervorrichtung ein verstellbares, zur Unterdrückung von Schwingungen des rotierenden Maschinenteils variierbares Schwingungstilgungssystem mit dem elastischen Dämpfungskörper 22 als Zusatz-Feder-/Dämpfersystem 4 und der Zusatzmasse 12, vorliegend gebildet durch Halbschalen 23. Zum Variieren und Abstimmen des Schwingungstilgungssystems ist die Schwingungstilgervorrichtung mit einer Spreizvorrichtung 5 versehen, wobei die Spreizkräfte vermittels des fluiden Druckmediums 31 erzeugt werden, das mittels einer Pumpvorrichtung dosiert zu- und abführbar ist. Die Druckkräfte des Druckmediums 31 werden über Spreizmittel 30 in radialer Richtung auf die in ihrem Umfang verstellbare Zusatzmasse 12, vorliegend also die Halbschalen 23, übertragen. Bei dem gezeigten Ausführungsbeispiel sind die Spreizmittel 30 durch lineare Kolben-Zylindereinheiten 300 gebildet, die mit ihren Verstellachsen radial nach außen gerichtet und in dem die Hohlkammer 60 umgebenden Haltekörper 24 eingebaut sind. Die Kolben-Zylindereinheiten 300 sind vorzugsweise gleichmäßig in dem Haltekörper 24 verteilt angeordnet, insbesondere in parallelen Reihen mit gleichen Abständen in axialer Richtung und in Umfangsrichtung. Dabei sind die Kolben z. B. unmittelbar in angepassten Bohrungen des Haltekörpers 24 begrenzt geführt gelagert. Mittels der Kolben-Zylindereinheiten 300 werden die Halbschalen 23, bzw. bei anderer Ausgestaltung der Zusatzmasse 12 die betreffenden Körperabschnitte derselben durch den unterschiedlichen Druck mehr oder weniger weit radial nach außen verlagert, wobei der elastische Dämpfungskörper 22 mehr oder weniger stark an die Innenfläche der Hülse 21 oder gegebenenfalls unmittelbar (bei fehlender Hülse) an die Innenfläche des Maschinenteils 20 gedrückt wird, so dass sich entsprechend auch die Dämpfungseigenschaften und die Federeigenschaften des elastischen Dämpfungskörpers 22 ändern.

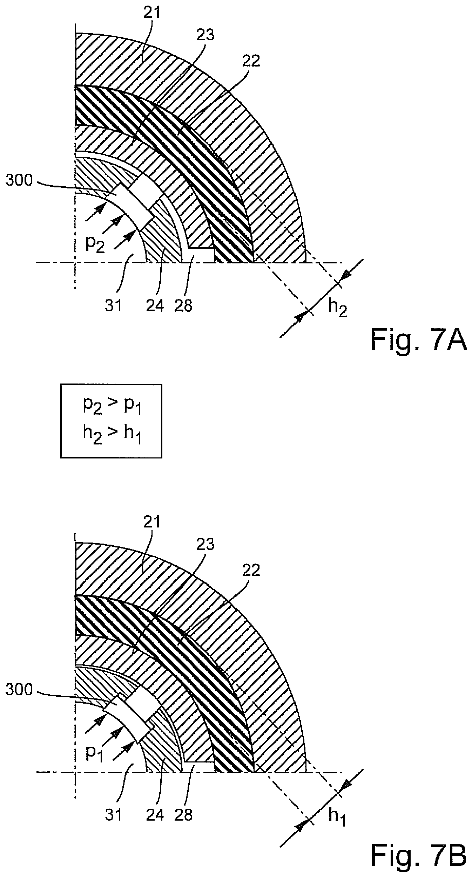

Die Verstellvorgänge mittels der Kolben-Zylindereinheiten 300 sind in den Fig. 7A und 7B veranschaulicht. Fig. 7A zeigt dabei die Position des Kolbens einer KolbenZylindereinheit 300 bzw. eines Druckzylinders bei einem Druck p₂, während Fig. 7B die Position des Kolbens bzw. des Druckzylinders bei einem Druck p₁ zeigt, wobei der Druck p₂ größer als der Druck p₁ ist. Demzufolge ist die betreffende Halbschale 23 in Fig. 7A weiter radial nach außen verlagert als in Fig. 7B und somit auch der Elastomerkörper 22 in Fig. 7A stärker zusammengedrückt als in Fig. 7B, wodurch der Elastomerkörper 22 in Fig. 7A eine geringere Dicke h₂ als in Fig. 7B mit der Dicke h₁ aufweist. Durch die Erhöhung bzw. Verminderung der Flächenpressung bzw. Druckspannung, welche auf den elastischen Dämpfungskörper 22 in Form des im Querschnitt ringförmigen Elastomerkörpers einwirkt, ändern sich dessen Eigenfrequenz und Dämpfungsgrad entsprechend dem über das Druckmedium 31 aufgebauten Druck.

Alternativ zu den Kolben-Zylindereinheiten 300 bzw. in angepasste gestufte Bohrungen in der Wand des Haltekörpers 24 eingesetzten Kolbenzylindern kann die Hohlkammer 60 auch von einem elastischen oder balgartigen bzw. aufweitbaren Wandmaterial umgeben sein, über das die Druckkräfte des Druckmediums 31 auf die nach außen verlagerbare Zusatzmasse 12, vorliegend also die Halbschalen 23, übertragen werden kann. Hierbei bildet der z. B. balgartige Aufnahmekörper des Druckmediums 31 ein Spreizmittel der Spreizvorrichtung.

Der in der Hohlkammer 60 bewirkte Druck des Druckmediums kann mittels der Steuerungseinrichtung 50 definiert entsprechend den zu unterdrückenden Schwingungen des Maschinenteils 20 über die Pumpvorrichtung gesteuert oder geregelt werden. Als Messgröße für die Regelung kann z. B. bei einer Druckwalze die Qualität des erzielten Druckergebnisses herangezogen und mittels eines Programms in der Steuerungseinrichtung berücksichtigt oder zur Einstellung von Vorgabewerten zugrunde gelegt werden. Alternativ kann unmittelbar die Schwingung des rotierenden Maschinenteils 20 zugrunde gelegt werden, wobei die Messgröße mittels Sensoren unter Berührung oder berührungslos (z. B. optisch, induktiv, kapazitiv) erfasst werden kann. Alternativ oder zusätzlich kann eine Regelgröße rechnerisch über ein Modell ermittelt werden.

## Patentansprüche

1. Rotierender Maschinenteil (20) mit einer gedämpften Schwingungstilgervorrichtung, die in einen konzentrischen zentralen Hohlraum (6) des Maschinenteils (20) eingebracht ist und eine Zusatzmasse (12) sowie ein zwischen dieser und der den Hohlraum begrenzenden Innenfläche des Maschinenteils (20) angeordnetes Zusatz-Feder-/Dämpfungssystem (4) mit einem elastischen Dämpfungskörper (22) aufweist,
- wobei die Zusatzmasse (12) mittels einer Spreizvorrichtung (5) gegen die Federkraft des elastischen Dämpfungskörpers (22) radial nach außen drückbar ist,
- wobei die Spreizvorrichtung (5) mit einem fluiden Druckmedium (31) beaufschlagbare Spreizmittel (30) aufweist, die radial nach außen gerichtete Drucckräfte erzeugen, und
- wobei die Spreizmittel (30) radial nach außen gerichtete Kolben-Zylindereinheiten (300) aufweisen, die in einem zentralseitig innerhalb der Zusatzmasse (23) angeordneten Haltekörper (24) gelagert sind, und/oder die Spreizmittel (30) mindestens einen zentralseitig innerhalb der Zusatzmasse (12) angeordneten balgartigen Aufnahmekörper für das Druckmedium (31) aufweisen.

2. Rotierendes Maschinenteil nach Anspruch 1,
**dadurch gekennzeichnet,**
**dass** das Druckmedium (31) gasförmig oder flüssig ist und die Spreizvorrichtung (5) pneumatisch oder hydraulisch arbeitend ausgebildet ist.

3. Rotierendes Maschinenteil nach einem der vorhergehenden Ansprüche,
**dadurch gekennzeichnet,**
**dass** der Maschinenteil (20), die Zusatzmasse (3), der Dämpfungskörper (22), der Hohlraum (6) und eine zentral in der Schwingungstilgervorrichtung ausgebildete Hohlkammer (60) zylinderförmig ausgebildet sind und stirnseitig an der Hohlkammer (60) eine Zuführeinheit zum Einbringen des Druckmediums (31) in die Hohlklammer (60) angeordnet ist.

4. Rotierendes Maschinenteil nach Anspruch 3,
**dadurch gekennzeichnet,**
**dass** die Hohlkammer (60) auf ihrer von der Zuführeinheit abgelegenen Stirnseite mit einem Bodenabschnitt (34) abgeschlossen ist.

5. Rotierendes Maschinenteil nach Anspruch 3 oder 4,
**dadurch gekennzeichnet,**
**dass** die Zuführeinheit ein Kupplungsteil (32) aufweist, an das eine Leitung für das Druckmedium (31) mit einem Gegenstück (33) fluiddicht ankoppelbar ist.

6. Rotierendes Maschinenteil nach Anspruch 5,
**dadurch gekennzeichnet,**
**dass** der Kupplungsteil (32) eine Rotation des Maschinenteils (1) mit der Spreizvorrichtung (5) relativ zu der Leitung mit dem Kupplungs-Gegenstück (33) zulässt.

7. Rotierendes Maschinenteil nach einem der vorhergehenden Ansprüche,
**dadurch gekennzeichnet,**
**dass** Teile der Kolben-Zylindereinheiten (300) in dem zu dem rotierenden Maschinenteil (20) konzentrischen zylinderförmigen Haltekörper (24) ausgebildet sind.

8. Rotierendes Maschinenteil nach einem der vorhergehenden Ansprüche,
**dadurch gekennzeichnet,**
**dass** die Zusatzmasse (12) aus mehreren in Umfangsrichtung voneinander getrennten Teilschalen, insbesondere zwei zylindrischen Halbschalen (23), gebildet ist.

9. Rotierendes Maschinenteil nach einem der Ansprüche 6 bis 8,
**dadurch gekennzeichnet,**
**dass** der Hohlraum (60) über den Kupplungsteil (33) und die Leitung mit dem Gegenstück an ein Druckmediumreservoir (40) angeschlossen oder anschließbar ist und
**dass** eine Steuerungseinrichtung (50) vorhanden ist, die zur gesteuerten oder geregelten Zuführung und Abführung des Druckmediums (31) ausgebildet ist.

## Claims

1. Rotating machine part (20) comprising a damped vibration absorbing device which is introduced into a concentric central cavity (6) in the machine part (20) and has an additional mass (12) and an additional spring/damping system (4) which comprises an elastic damping body (22) and is arranged between said mass and the inner surface of the machine part (20), which surface defines the cavity,
- wherein the additional mass (12) is pressed radially outward against the spring force of the elastic damping body (22) by means of an expanding device (5),
- wherein the expanding device (5) comprises expanding means (30) which can be acted upon by a fluid pressure medium (31) and which generate compressive forces which are directed radially outward, and
- wherein the expanding means (30) comprise piston-cylinder units (300) which are directed radially outward and which are mounted in a holding body (24) arranged centrally within the additional mass (23), and/or the expanding means (30) comprise at least one bellows-like receiving body for the pressure medium (31), which body is arranged centrally within the additional mass (12).

2. Rotating machine part according to claim 1, **characterized in that** the pressure medium (31) is gaseous or liquid, and the expanding device (5) is designed to operate pneumatically or hydraulically.

3. Rotating machine part according to either of the preceding claims, **characterized in that** the machine part (20), the additional mass (3), the damping body (22), the cavity (6) and a hollow chamber (60) formed centrally in the vibration absorbing device are cylindrical, and a supply unit for introducing the pressure medium (31) into the hollow chamber (60) is arranged on the end face of the hollow chamber (60).

4. Rotating machine part according to claim 3, **characterized in that** the hollow chamber (60) is closed, by means of a base portion (34), on the end face thereof that is remote from the supply unit.

5. Rotating machine part according to either claim 3 or claim 4, **characterized in that** the supply unit comprises a coupling part (32) to which a line for the pressure medium (31), which line has a counterpart (33), can be coupled in a fluid-tight manner.

6. Rotating machine part according to claim 5, **characterized in that** the coupling part (32) permits the machine part (1) which has the expanding device (5) to rotate relative to the line which has the coupling counterpart (33).

7. Rotating machine part according to any of the preceding claims, **characterized in that** parts of the piston-cylinder units (300) are formed in the cylindrical holding body (24) which is concentric to the rotating machine part (20).

8. Rotating machine part according to any of the preceding claims, **characterized in that** the additional mass (12) is formed from a plurality of partial shells which are separated from one another in the circumferential direction, in particular two cylindrical half shells (23).

9. Rotating machine part according to any of claims 6 to 8, **characterized in that** the cavity (60) is connected or connectable to a pressure medium reservoir (40) by means of the coupling part (33) and the line which has the counterpart, and **in that** a control apparatus (50) is provided which is designed to supply and discharge the pressure medium (31) in a controlled or regulated manner.

## Revendications

1. Pièce de machine rotative (20) comportant un dispositif amortisseur de vibrations amorti qui est inséré dans une cavité centrale concentrique (6) de la pièce de machine (20) et qui présente une masse supplémentaire (12) ainsi qu'un système de ressort/d'amortissement supplémentaire (4) comportant un corps d'amortissement élastique (22) et disposé entre la masse supplémentaire et la surface intérieure de la pièce de machine (20) délimitant la cavité,
- la masse supplémentaire (12) pouvant être pressée radialement vers l'extérieur contre la force de ressort du corps d'amortissement élastique (22), au moyen d'un dispositif d'écartement (5),
- le dispositif d'écartement (5) présentant des moyens d'écartement (30) pouvant être sollicités par un support sous pression (31) fluide, et lesdits moyens d'écartement générant des forces de compression orientées radialement vers l'extérieur, et
- les moyens d'écartement (30) présentant des unités à piston et cylindre (300) orientées radialement vers l'extérieur et montées dans un corps de retenue (24) disposé sur le côté central à l'intérieur de la masse supplémentaire (23), et/ou les moyens d'écartement (30) présentant au moins un corps de réception du type à soufflet destiné au support sous pression (31), lequel corps de réception est disposé sur le côté central, à l'intérieur de la masse supplémentaire (12).

2. Pièce de machine rotative selon la revendication 1, **caractérisée en ce que** le support sous pression (31) est gazeux ou liquide et le dispositif d'écartement (5) est conçu pour fonctionner de manière pneumatique ou hydraulique.

3. Pièce de machine en rotation selon l'une des revendications précédentes, **caractérisée en ce que** la pièce de machine (20), la masse supplémentaire (3), le corps d'amortissement (22), la cavité (6) et une chambre creuse (60) réalisée au centre dans le dispositif amortisseur de vibrations présentent une forme cylindrique, et **en ce qu'**une unité d'alimentation permettant d'introduire le support sous pression (31) dans la chambre creuse (60) est disposée sur le côté frontal de la chambre creuse (60).

4. Pièce de machine rotative selon la revendication 3, **caractérisée en ce que** la chambre creuse (60) est fermée sur son côté frontal isolé de l'unité d'alimentation par une section de fond (34).

5. Pièce de machine rotative selon la revendication 3 ou 4, **caractérisée en ce que** l'unité d'alimentation présente une pièce d'accouplement (32) au niveau de laquelle une conduite destinée au support sous pression (31) peut être accouplée à une contre-pièce (33) de manière étanche aux fluides.

6. Pièce de machine rotative selon la revendication 5, **caractérisée en ce que** la pièce d'accouplement (32) permet la rotation de la pièce de machine (1) avec le dispositif d'écartement (5) par rapport à la conduite avec la contre-pièce d'accouplement (33).

7. Pièce de machine rotative selon l'une des revendications précédentes, **caractérisée en ce que** des pièces des unités à piston et cylindre (300) sont réalisées dans le corps de retenue (24) cylindrique concentrique par rapport à la pièce de machine rotative (20).

8. Pièce de machine rotative selon l'une des revendications précédentes, **caractérisée en ce que** la masse supplémentaire (12) est formée d'une pluralité de coques partielles séparées dans la direction circonférentielle, en particulier deux demi-coques cylindriques (23).

9. Pièce de machine rotative selon l'une des revendications 6 à 8, **caractérisée en ce que** la cavité (60) est reliée ou peut être reliée à un réservoir de support sous pression (40) par l'intermédiaire de la pièce d'accouplement (33) et de la conduite avec la contre-pièce, et **en ce qu'**il est prévu un dispositif de commande (50) destiné à l'alimentation et à l'évacuation commandées ou régulées du support sous pression (31).
